# EUROPEAN PATENT SPECIFICATION

(11) **EP 0 217 618 B1**
(45) Date of publication and mention of the grant of the patent: **09.06.1993**
(21) Application number: 86307286.4
(22) Date of filing: 22.09.1986
(51) Int. Cl.: C08F 8/46, C08F 8/44

(54) **Sulfomaleation of polyolefins**
Sulfomaleinisierung von Polyolefinen
Sulfomaléinisation de polyoléfines

(30) Priority: 20.09.1985 US 778269; 16.12.1985 US 809030
(43) Date of publication of application: 08.04.1987
(73) Proprietor: EXXON RESEARCH AND ENGINEERING COMPANY, Florham Park, New Jersey 07932-0390 (US)
(72) Inventor: Brois, Stanley James, Westfield New Jersey 07090 (US); Thaler, Warren Alan, Flemington New Jersey 08822 (US); Ferrara, Francis Nicholas, Hazlet New Jersey 07730 (US)
(74) Representative: Bawden, Peter Charles

(56) References cited:
- EP-A- 0 014 288
- EP-A- 0 165 700
- FR-A- 2 271 279

## Description

The present invention relates to novel polymers which are adducts of sulphomaleic anhydride its isomers or derivatives, with unsaturated organic molecules, wherein the novel products are produced by contacting sulphomaleic anhydride with an unsaturated polymer to form the novel product. In particular the unsaturated polymer can be a polyolefin polymer ranging in molecular weight from about 500 to about 10,000,000.

The resultant adduct of sulphomaleic anhydride and the unsaturated hydrocarbon polymer can be further reacted with: a polyamine, ammonia, amines or metallic bases which will neutralize the sulphonic acid group and react with the anhydride group as well. The products are ionomeric polymers which are useful as thermoplastic elastomers.

The instant invention further relates to a process for controlling the viscosity of organic liquids by incorporating in said liquid a minor amount of a polymer which is a hydrolyzed and neutralized sulphomaleic anhydride adduct with an unsaturated hydrocarbon and, optionally, a cosolvent for the ionic groups of said polymer. A cosolvent is optionally added which will optionally solubilize the polymer groups and provide a reasonable homogeneous mixture of solvent, cosolvent and polymer. The preferred compositions prepared by the method of the instant invention comprise an organic liquid having a solubility parameter of from 6 to 10.5 in combination with the polymer and a non-volatile alcohol or amine as the cosolvent. Solutions of said polymers are unusually resistant to viscosity loss due to polar additives (such as alcohols) or polar impurities.

Various unsaturated hydrocarbon polymers have been reacted with maleic anhydrides to form a variety of maleic anhydride adducts of unsaturated hydrocarbon polymers. The reactivity of maleic anhydride with many unsaturated hydrocarbon polymers is poor and in some instances, as for example with EPDM rubber, even employment of extensive boating is ineffective. Free radical reactions which graft maleic anhydride onto the unsaturated hydrocarbon polymer have been utilized as alternative routes. Free radical grafting leads to chain scission, crosslinking and solvent grafting if the solvent is sufficiently reactive. The reaction of sulphomaleic anhydride with the unsaturated hydrocarbon polymer overcomes these aforementioned deficiencies in that the sulfomaleic anhydride can be reacted with the unsaturated hydrocarbon polymer at moderate temperatures in either the bulk or solution state without the employment of free radical initiators. Subsequent neutralization and reaction of the anhydride groups of resultant adduct of sulphomaleic anhydride with unsaturated hydrocarbons produces valuable ionomers which are useful as thermoplastic elastomers and solution viscosifiers.

The rapid decrease in viscosity of liquids with increasing temperature or polymer concentration is well-known. Ideally, for many applications (automobile lubricants,) it would be desirable to solve this problem so that viscosity would be insensitive to temperature or polymer level. Alternatively, it might be desirable to provide liquid systems whose viscosities actually increase with temperature or increase as polymer level is decreased. It is true that with selected polymeric additives it has been possible to reduce substantially the viscosity change with temperature which does occur with most oils and similar systems. These polymer additives, known as viscosity index improvers (or V.I. improvers) are generally high molecular weight polymers.

The way in which these additives function can be summarized very briefly. In effect, they perform two functions, i.e., thickening, which merely increases fluid viscosity; and Viscosity Index (V.I.) improvement, which corresponds to limited thickening at ambient temperatures and a correspondingly greater thickening at elevated temperatures. This can be accomplished by utilizing a polymeric additive which is poorly solvated by the liquid at ambient temperatures; however, at elevated temperatures the polymer is more highly solvated, such that the polymer expands and is a relatively more effective thickener.

While these V.I. Improvers have proven successful commercially, it is important to note that their effect at reducing viscosity changes with temperatures is rather mild. For a typical base oil containing a suitable V.I. Improver the kinematic viscosity will still decrease by a factor of from 5 to 10 as the temperature increases from 30^{o}C to 100^{o}C. Obviously, if it is desired to hold the viscosity roughly constant with such temperature changes current technology has not offered an appropriate additive system. Alternatively, it if is desired to hold viscosity reasonably constant as the polymer concentration is decreased conventional wisdom has not previously offered that option.

U. S. Patent No. 3,396,136 describes how copolymers of alkenyl aromatic sulphonic acids, when properly neutralized, can be employed as thickeners for nonpolar solvents. Those metal sulfonate systems have been shown to be very effective; however, when employed as to component systems (i.e., ionic polymer plus non-polar solvent) the variation of viscosity with increased temperature is very conventional and predictable. That is, the solution viscosity decreases markedly as temperature is increased.

U. S. Patent No. 3,396,136 further teaches "in situ" neutralization of the sulphonic acid polymer which, under some conditions, can result in the availability of a small amount of polar cosolvent, i.e., a solvent for the sulphonate groups, about equal in amount to the amount of sulphonate groups which are present. This amount of polar cosolvent is not within the limits of the instant invention, which only optionally requires amounts of the third component (which interacts with the ionomeric groups of the ionomer copolymer) at levels which range from 10 to 600 times the molar equivalence of ionic groups. This level of cosolvent is about one to two orders of magnitude or more higher than employed in the cited art. In addition, the cited patent is restricted to aromatic sulfonate polymers. The instant invention describes other polymers, such as sulphonated ethylene propylene terpolymers, and sulphonated Butyl., which are a portion of the polymer complex.

U. S. Patent No. 3,666,430 teaches the gelling of organic liquids by the interaction of polar "associative bonds" which includes hydrogen bonding and "ionic cross-linking". Again, this patent specifies that two components are necessary -- the associating polymer (or polymers in some cases) and the non-polar organic liquid. There is no mention of a third polar cosolvent except to point out that such polar liquids should not be present. Specifically, this patent states (at column 2, line 7) that the hydrocarbon liquids to which this invention is to be applied should not contain a substantial portion of a miscible protolytic liquid, such as methanol. It is clear that the language of this patent limits this invention to gels and further that any amount of polar liquids which are present to an extent where they disrupt those gels are undesirable. The instant invention is distinct from that cited in that amounts of such polar compounds as will break up gel at ambient conditions are often desirable and, in fact, the preferred state is free of any said gel at ambient temperatures.

U. S. Patent No. 3,679,382 teaches the thickening of aliphatic hydrocarbons with synthetic organic polymers which contain olefinically unsaturated copolymerizable acids, amides, hydroxyacrylic esters, and sulphonic acids, It is emphasized in this patent (at column 3, line 72) that it is critical that in the preparation of such polymers no surface active agent, catalyst or other additive be employed which introduces a metallic ion into the system. Therefore, it is preferred to employ ammonium or amine salts. It is clear that this invention (U. S. Patent No. 3,679,382) specifically precludes the use of metallic counterions and is directed towards amine or ammonium derivatives. Metallic counterions are very effective in the instant invention. Finally, this cited patent does describe (at column 7, lines 13-19) that the addition of alcohols will reduce the viscosity of the thickened hydrocarbon and alter flow characteristics thereof.

FR-A-2 271 279 (GB-A-1 499 733) describes a process for controlling the viscosity of an organic liquid having a solubility parameter of from 6 to 10.5 by the addition of an ionic, preferably sulphonated, polymer having a backbone soluble in the organic liquid and a cosolvent (e.g. and alcohol or amine) which will solubilize the ionic groups. A preferred backbone component is sulphonated ethylene-propylene-ethylidene-norbornene (ENB). The ionic groups may be neutralised by elements of Groups IA, IIA, IB, or IIB of the Periodic Table or lead, tin or antimony.

According to the present invention there is provided a polymer which is an adduct of an unsaturated hydrocarbon polymer with sulphomaleic anhydride or a derivative or isomer thereof selected from: 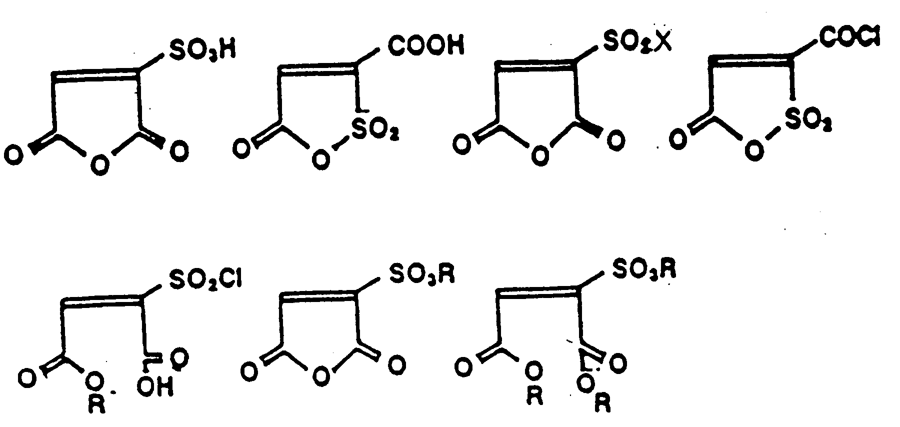
where X is halogen and R is alkyl, alkylsilyl or aryl; sulphofumeric acid and beta-sulphoacrylic anhydride.

The invention enables the production of ion containing polymers (ionomers) especially sulphonate ionomers, by a non-sulphonation route. The invention also enables the activation of maleic anhydride or its derivatives towards Alder "Ene" reactions or Diels-Alder reactions, such that polymers which have unsaturated sites will readily form adducts. In particular polymers such as EPDM rubbers which do not undergo thermal reaction readily with maleic anhydride will now react facily.

It has been further discovered that the viscosity of organic liquids may be conveniently controlled by incorporating in said organic liquid a minor amount of a polymer which is a sulphomaleic anhydride adduct with an unsaturated hydrocarbon which has been hydrolyzed and neutralized.

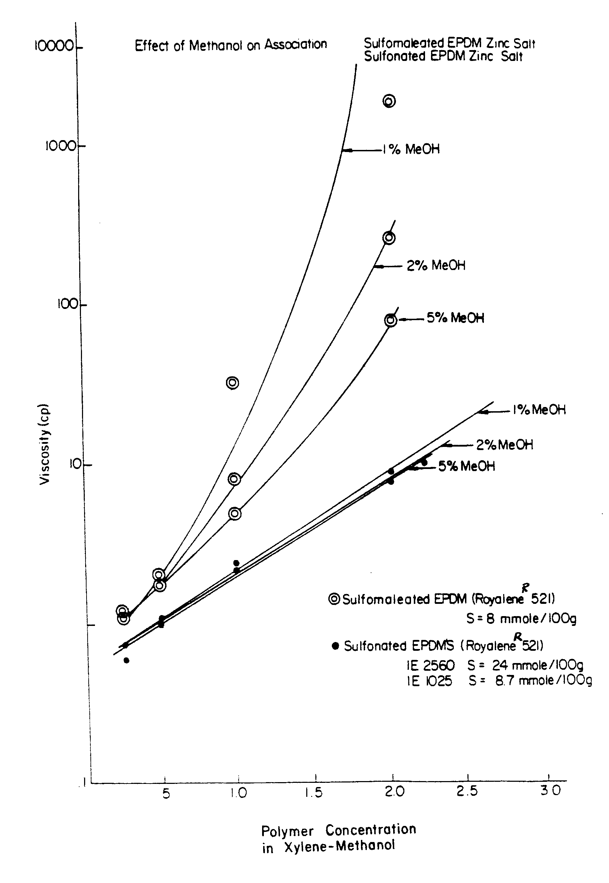

Figure 1 illustrates a graph of viscosity versus concentration for various polymer solutions. The differences between salts of sulphonated EPDM and salts of sulphomaleated EPDM are demonstrated. The latter viscosity increases much more efficiently in the pressure of polar compounds, such as methanol.

The present invention relates to polymers which are, e.g., sulphomaleic anhydride adducts with unsaturated hydrocarbons which are formed by reacting sulphomaleic anhydride with an unsaturated hydrocarbon in either the solution or the bulk state.

Sulphomaleic anhydride which is represented by the formula: 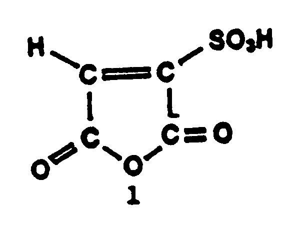
is formed by reacting maleic anhydride with sulfur trioxide. Besides sulphomaleic anhydride itself, one can also employ various derivatives and isomers, notably sulphomaleic acid, sulphofumaric acid, beta-sulphoacrylic anhydride and their various esters and other derivatives of either or both of the carboxyl groups.

Examples of sulphomaleic anhydride, its isomers and derivatives (hereinafter referred to as "sulphomaleic compounds") which are suitable for this reaction include, but are not limited to, the following: 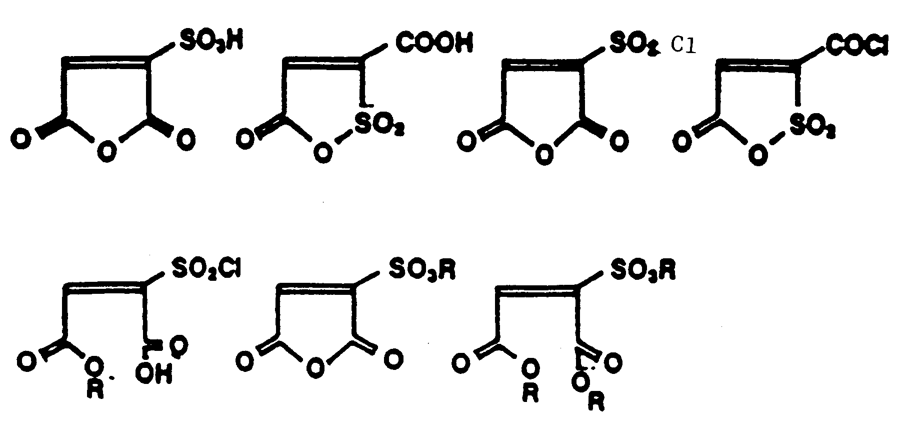
where R = H, alkyl, alkylsilyl, and aryl,
The sulfomaleic compound is reacted with an unsaturated hydrocarbon polymer which may be selected from the group consisting of EPDM terpolymers, EPR, polyisoprene, polybutadienes, Butyl rubber, styrene-butadiene and styrene-isoprene "random" and block copolymers, Butyl rubbers, polybutenes, hydrocarbon resins such as a Escorez^{R} resins, etc. Oligomers or polymers which have olefin functionality near the end of the chain are of interest. Such molecules include, but are not limited to, polyisobutene and polybutenes of various molecular weights. Vistanex^{R}, Vistanex J^{R} are examples of such polymers. Plastics such as polyethylene and polypropylene containing low levels of unsaturation are also suitable polyolefins.

The expression "Butyl rubber", as employed in the specification and claims, is intended to include copolymers made from a polymerization reaction mixture having therein from 70 to 99.5% by weight of an isobutylene and 0.5 to 30% by weight of a conjugated multiolefin having from 4 to 14 carbon atoms, e.g. isoprene. The resulting copolymer contains 85 to 99.8% by weight of combined isoolefin and 0.2 to 15% of combined multiolefin.

Butyl rubber generally has a Staudinger molecular weight as measured by GPC of 20,000 to 500,000, preferably 25,000 to 400,000 especially 100,000 to 400,000 and a Wijs Iodine No. of 0.5 to 50, preferably 1 to 15. The preparation of Butyl rubber is described in U.S. Patent 2,356,128.

For the purposes of this invention, the Butyl rubber may have incorporated therein from 0.2 to 10% of combined multiolefin; preferably 0.5 to 6%; more preferably, 1 to 4%, e.g., 2%.

Illustrative of such a Butyl rubber is Exxon Butyl 365 (Exxon Chemical Co.), having a mole percent unsaturation of 2.0% and a Mooney viscosity [ML, 1 + 3. 100°C (212^{o}F)] of 40 to 50.

Low molecular weight Butyl rubbers, i.e. Butyl rubbers having a viscosity average molecular weight of 5,000 to 85,000, and a mole percent unsaturation of 1 to 5%, may be sulfonated to produce the polymers useful in this invention. Preferably, these polymers have a viscosity average molecular weight of 25,000 to 60,000.

The EPDM terpolymers are low unsaturated polymers having 0.5 to 10.0 wt.% olefinic unsaturation, more preferably 2 to 8, most preferably 3 to 7 defined accordingly to the definition as found in ASTM-1418-64 and is intended to mean terpolymers containing ethylene and propylene in the backbone and an olefin residue in the side chain as result of multi-olefin incorporation in the backbone. Illustrative methods for producing these terpolymers are found in U.S. Patent 3,280,082, British Patent 1,030,289 and French Patent 1,386,600, The preferred polymers contain 40 to 75 wt.% ethylene and 1 to 10 wt.% of a diene monomer, the balance of the polymer being propylene. Preferably the polymer contains 45 to 70 wt.% ethylene, e.g. 50 wt.% and 2.6 to 8.0 wt.% diene monomer, e.g. 5.0 wt.%. The diene monomer is preferably a nonconjugated diene.

Illustrative of these nonconjugated diene monomers which may be used in the terpolymer (EPDM) are 1,4-hexadiene, dicyclopentadiene, 5-ethylidene-2-norbornene, 5-methylene-2-norbornene, 5-propenyl-norbornene, methyl tetrahydroindene and 4-methyl-5-methylene-2-norbornene.

A typical EPDM is Vistalon^{R} 2504 (Exxon Chemical Co.), a terpolymer having a Mooney viscosity [ML, 1 + 8, 100°C (212^{o}F)] of 40 and having an ethylene content of 50 wt.% and a 5-ethylidene-2-norbornene content of 5.0 wt.%. The M̅ₙ as measured by GPC of Vistalon^{R} 2504 is 47,000, the M̅ᵥ as measured by GPC is 145,000 and the M̅_{w} as measured by GPC is 174,000.

Another EPDM terpolymer Vistalon^{R} 2504-20 is derived from Vistalon^{R} 2504 (Exxon Chemical Co.) by a controlled extrusion process, wherein the resultant Mooney viscosity at 100°C (212^{o}F) is 20. The M̅ₙ as measured by GPC of Vistalon^{R} 2504-20 is 26,000, the M̅ᵥ as measured by GPC is 90,000 and the M̅_{w} as measured by GPC is 125,000.

Nordel^{R} 1320 (Dupont) is another terpolymer having a Mooney viscosity at 100°C (212^{o}F) of 25 and having 53 wt.% of ethylene, 3.5 wt.% of 1,4-hexadiene, and 43.5 wt.% of propylene.

The EPDM terpolymers of this invention have a number average molecular weight (M̅ₙ) as measured by GPC of 10,000 to 200,000, more preferably of 15,000 to 100,000, most preferably of 20,000 to 60,000. The Mooney viscosity [ML, 1 + 8, 100°C (212^{o}F)] of the EPDM terpolymer is about 5 to about 60, more preferably 10 to 50, most preferably 15 to 40. The M̅ᵥ as measured by GPC of the EPDM terpolymer is preferably below 350,000 and more preferably below 300,000. The M̅_{w} as measured by GPC of the EPDM terpolymer is preferably below 500,000 and more preferably below 350,000.

Other suitable olefin polymers include polymers comprising a major molar amount of C₂ to C₅ monoolefins, e.g., ethylene, propylene, butylene, isobutylene and pentene. The polymers may be homopolymers such as polyisobutylene, as well as copolymers of two or more such olefins such as copolymers of ethylene and propylene, butylene and isobutylene, propylene and isobutylene

The reaction of the sulphomaleic anhydride or its ester derivatives with the unsaturated hydrocarbon polymer can occur in solution, in a melt and in polymer processing equipment such as a rubber mill, a Brabender, an extruder or a Banbury mixer.

The polymer of the sulphomaleic adduct with the unsaturated hydrocarbon can be covalently bonded through its anhydride group with molecules containing polar groups. Such polar functionality molecules can be low molecular weight compounds, oligomers or polymers. Of particular interest are molecules containing amine functionality. Polyamines provide polarity to form molecules with a polar head and a hydrocarbon tail in addition to the ionic sulphonate site.

The sulphonic acid group of the sulfomaleic compound can be neutralized with ammonia, primary secondary or tertiary amines including the aforementioned amino compounds, or metal counterion selected from the group consisting of iron, lead, aluminum and groups IA, IIA, IB and IIB of the Periodic Table of Elements. The neutralization of the sulphonic acid groups of the sulfomaleic compound adduct of the unsaturated hydrocarbon polymer can be accomplished either in solution, in a melt or in polymeric processing equipment, as previously defined.

The polymer adduct of the invention may be incorporated into an organic liquid, e.g. to control its viscosity, at a concentration level of 0.01 to 20 grams per 100 ml of organic liquid, more preferably 0.5 to 5.

The organic liquid is preferably a hydrocarbon which has a solubility parameter of 6 to 10.5, wherein the organic liquid is selected from the group consisting of lubricating oils, synthetic oils, aliphatic oils, naphthenic oils, aromatic oils, aliphatic hydrocarbons, aromatic hydrocarbons and naphthenic hydrocarbons. The organic liquid preferably has a viscosity at 38°C (100^{o}F) of less than 35 centipoises.

The method of the instant invention preferably includes incorporating a cosolvent, for example a polar cosolvent, into the mixture of organic liquid and the polymer to solubilize the pendant ionomeric groups. The polar cosolvent will preferably have a solubility parameter of at least 10.0, more preferably at least 11.0, and may comprise from 0.1 to 40 weight percent, preferably .5 to 20 weight of the total mixture of organic liquid, ionomeric polymer and polar cosolvent.

While this definition of polar cosolvent is adequate, we also observe that cosolvents with especially long alkyl groups with hydroxyl groups on one or both ends are especially preferred. These cosolvents are based on C₁₀-C₃₀ alkyl chains.

It is also desirable that the polar cosolvent be more polar than the organic liquid. This is required in order that the proper interaction between polar cosolvent and ionic groups be obtained.

Normally the polar cosolvent will be a liquid at room temperature, however, this is not a requirement. It is required that the polar cosolvent be soluble or miscible with the organic liquid at the levels employed in this invention. Under normal circumstances this miscibility requirements precludes the use of water as a polar cosolvent. The polar cosolvent must be present in amounts of from 20 to 600 moles per mole of ionic group in order to give the desirable results of the instant invention and preferably from 30 to 400 moles per mole of ionic group. This level of cosolvent is desirable in creating solutions which can be isoviscous with temperature on concentration.

The following examples illustrate the present invention without, however, limiting the same thereto.

### Example 1 - EPDM Rubber with Sulphomaleic Anhydride

A solution of 50g of dry EPDM Rubber (Vistalon^{R} 2504) in 1000 ml of dry xylene was heated at 130^{o}C and stirred under nitrogen and 2.67g (15 mmole) of sulphomaleic anhydride was added and heating continued for four hours.

After cooling the sulphonic acid was neutralized and the anhydride reacted with excess methyl amine (21.2g). The polymer solution became extremely viscous and began to climb the stirrer indicating that a polymeric methylammonium sulphonate ionomer had been formed. Methanol (50ml) was added to attenuate the strong intermolecular associations and the viscosity decreased.

After standing overnight the polymer was precipitated in a high speed mixer with 4000 ml of isopropyl alcohol-water (70:30), collected on a filter and washed again in the mixer with another portion of IPA-water. A small quantity of Irganox^{R} 1010 antioxidant was added and the polymer filtered and vacuum dried at 50^{o}C.

Microanalysis indicated that the resulting product contained 0.46% S (14.2 mmole/100g) and 0.265% N (18.9 mmole/100g).

Treatment of a solution of the modified polymer in 95:5 toluene methanol with excess sodium methoxide in methanol to free ionically bound methylamine and isolation as the sodium salt gave a product whose analysis showed 0.40% S (12.5 mmole/100g) and 0.115%N (8.2 mmole/100g).

### Example 2 - EPDM Rubber with chlorosulphonyl maleic anhydride

According to the method of example 1, 2.95g of chlorosulphonylmaleic anhydride was reacted with 50g of Vistalon^{R} 2504 EPDM rubber, followed by reaction of the sulphonyl chloride and carboxylic anhydride groups with excess methylamine. The polymer was isolated and cleaned as in example one.

Microanalysis indicated the presence of 0.46% S (14.2 mmole/100g) and 0.359% N (25.6 meq/100g). Some gelation of the polymer product was observed.

Treatment of this polymer with sodium methoxide solution and isolation as in example one gave a product whose microanalysis showed 0.39% S (12.2 mmole/100g) and 0.194% N (13.8 mmole/100g).

### Example 3 Butyl Rubber with chlorosulphonyl maleic anhydride

According to the method of example 1, 2.95g of chlorosulphonyl maleic anhydride was reacted with 50g of Butyl Rubber (Exxon^{R} 365 Butyl Rubber). After treatment with methylamine, the isolated polymer contained 0.47% S (14.7 mmole/100g) and 0.468% N (33.4 mmole/100g). Further reaction with sodium methoxide gave a polymer whose elemental analysis showed 0.45% S (14.4 mmole/100g) and 0.215% N (15.3 mmole/100g).

### Example 4 EPDM Rubber with 2-chloroformyl-3-sulphoacrylic anhydride

According to the method of example 1, 50g of EPDM (V-2504) and 2.95g of 2-chloroformyl-3-sulphoacrylic anhydride were reacted. After treatment with methylamine the isolated polymer contained 0.40% S (12.5 mmole/100g) and 0.445% N (32.1 mmole/100g). After treatment with sodium methoxide the isolated polymer gave the following microanalysis: 0.52% S (16.3 mmole/100g) and 0.205% N (14.6 mmole/100g).

### Example 5 EPDM Rubber with the methyl ester of chlorosulphonyl maleic anhydride.

Chlorosulphonyl maleic anhydride was reacted with one molar equivalent of methanol in chloroform solution. The chloroform was removed under vacuum and 3.43g of the resulting product was reacted with 50g of V-2504 EPDM according to the method of Example 1. After treatment with methylamine, the isolated polymer, according to microanalysis contained 0.38 % S (11.9 mmole/100g) and 0.179% N (12.8 mmole/100g). After treatment with sodium methoxide the analysis showed 0.36% S (11.2 mmole/100g) and 0.089% N (6.4 mmole/100g).

### Example 6 Conjugated Diene Butyl with sulphomaleic anhydride

According to the method of example 1, 2.67g of sulphomaleic anhydride was reacted with 50g of CD Butyl 7614. After treatment with methylamine and isolation the product contained 0.38% S (11.9 mmole/100g) and 0.248% N (17.7 mmole/100g).

### Example 7 Bulk Reaction of EPDM with sulphomaleic anhydride

Vistalon^{R} 2504 EPDM (50g) was fluxed on a 3" electric mill at 120^{o}C. Sulphomaleic anhydride (1.05g) was added slowly. After the addition was complete the sample was mixed for a few minutes and zinc stearate (2.35g) was added and mixing continued for a few minutes longer.

The resulting product was a tough elastic material that resembled a crosslinked rubber. However, the product was soluble in 95:5 toluene:methanol indicating that the product was a thermoplastic elastic "ionomer".

### Example 8 Polyisobutylene with sulphomaleic anhydride

About 250g of polyisobutylene (M̅n = 900) was dissolved in 200 ml of xylene at room temperature under a nitrogen blanket. To the stirred xylene solution was gradually added 60 g of sulphomaleic anhydride at about 35^{o}C. The reaction mixture gas refluxed for about eight hours, and then concentrated by roto-evaporation. The residue was taken up in 2.5 ℓ of ether and washed twice with 500 ml portions of water. The ether solution was dried over MgSO4, filtered, and concentrated by roto evaporation to give a sulfomaleated product which analyzed for 0.33% sulfur.

### Example 9 Sulphonated EPDM Thermoplastic Elastic Ionomers from EPDM and Sulfomaleic Anhydride

Royalene^{R} 521 EPDM rubber, 50g (mill dried) dissolved in 1,000 ml dry xylene was treated with 2.67 g of sulphomaleic anhydride for 4 hours at 130^{o}C. After cooling, the resulting product was neutralized with either zinc methoxide, sodium methoxide or zinc acetate in methanol. A substantial viscosity increase was noted upon addition of the base. Additional methanol was added when necessary to reduce the viscosity. Stirring was continued to 0.5 hour and the polymer was isolated from isopropanol in a high speed mixer. The resulting crumb was dried in a vacuum oven at 50^{o}C.

### Example 10 Sulphonated EPDM Thermoplastic Elastic Ionomers from EPDM and Sulphoester Maleic Anhydride (Methoxysulfonyl Maleic Anhydride)

According to the method of the previous Example Royalene^{R} 521 EPDM rubber in xylene was reacted with methoxysulphonyl anhydride at the rate of 15 or 10 mmole per 100 g of polymeric and the product neutralized and isolated as before.

### Example 11 Tensile Properties

The products of Examples 9 and 10 were compounded with 10 parts zinc stearate and 0.5 parts Irganox^{R} 1010 on a hot mill (140-170^{o}C) for 20 minutes. The compounds were pressed at 192^{o}C into pads which were cut into dumbbells for testing on an Instron^{R} (Model 1122).

Tensile results in the Table below show that the products are strong ionomers when compared with the modified EPDM (Royalene^{R} 521). The products also compare favorably with sulphonated EPDM, suggesting even stronger associations at a given sulfur level.

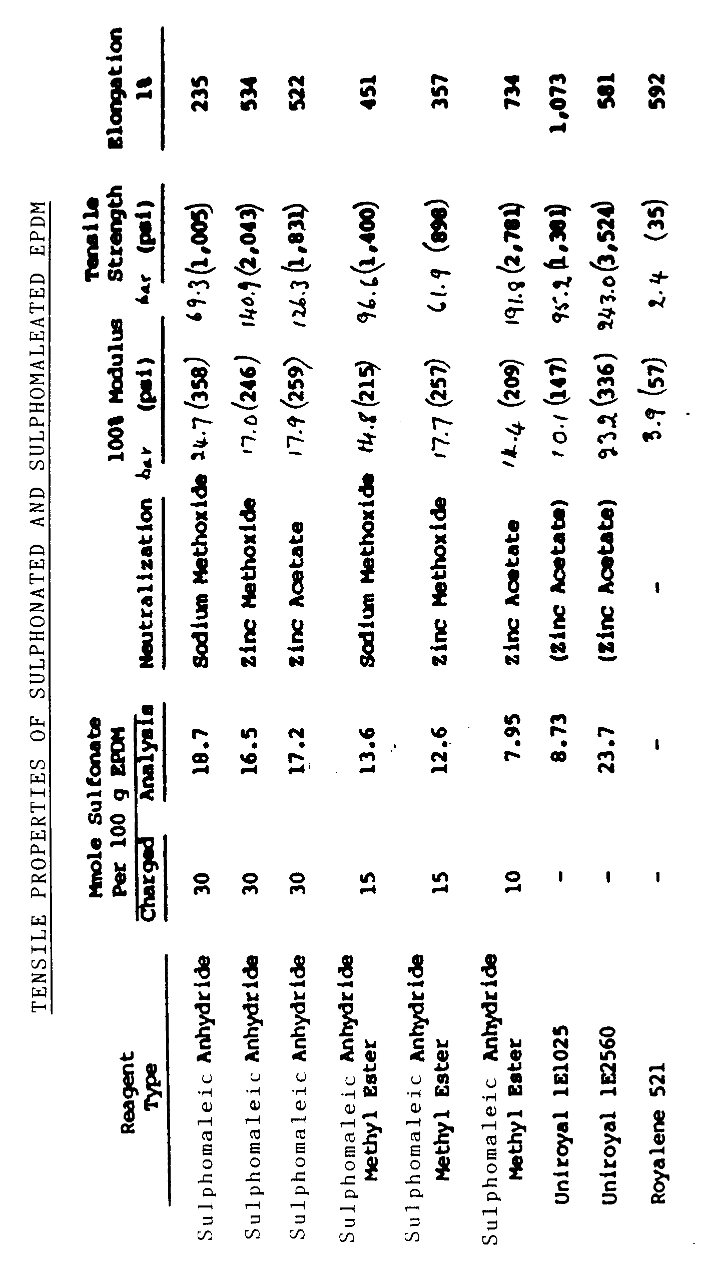

### Example 12- Sulphonated EPDM Thermoplastic Elastic Ionomers from EPDM and Sulfomaleic Anhydride Ester (Methoxysulfonyl Maleic Anhydride)

According to the method of Example 9 Royalene 521 EPDM rubber in xylene was reacted with sulphomaleic anhydride methyl ester or sulfomaleic anhydride trimethyl silylester at the rate of 10 or 30 mole per 100 g of polymeric and the product neutralized and isolated as before.

### Example 13

Sulphomaleic anhydride or maleic anhydride sulphoester-adducts with EPDM were hydrolyzed and neutralized during isolation. Solutions were prepared in xylene-methanol at several concentrations of polymer and varying methanol content. A comparison of a zinc salt of said polymer with zinc salts of sulpho-EPDM's shows that the material of the instant invention is much more efficient at viscosification than ordinary sulphonated EPDM zinc polymers. Even at higher sulphonation levels ordinary sulphonated EPDM's were inefficient in the presence of methanol.

## Claims

1. A polymer which is an adduct of an unsaturated hydrocarbon polymer with sulphomaleic anhydride or a derivative or isomer thereof selected from: 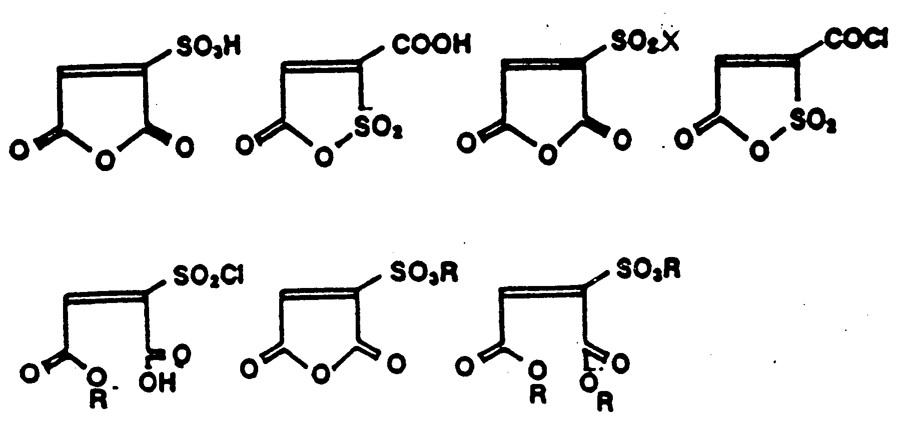 where X is halogen and R is alkyl, alkylsilyl or aryl; sulphofumaric acid and beta-sulphoacrylic anhydride.

2. A polymer according to claim 1 wherein said unsaturated hydrocarbon polymer is selected from EPDM terpolymers, ethylene propylene copolymers, polyisoprene, Butyl rubber, polybutadiene; styrene-butadiene and styrene-isoprene random and block copolymers; polypropylenes and polyisobutylenes; and polyethylene and polypropylene containing low levels of unsaturation.

3. A modification of the polymer of claim 1 or claim 2 wherein the sulphonic acid groups have been neutralised with a metal counterion selected from iron, aluminum, lead and Groups IA, IIA, IB, and IIB of the Periodic Table of Elements.

4. A modification of the polymer of claim 1 or claim 2 wherein the sulphonic acid groups have been neutralised with ammonia or an organic amine or polyamine.

5. Use of a polymer according to any preceding claim as a thermoplastic elastomer.

6. Use of a polymer according to any of claims 1 to 4 as an additive for organic liquids.

7. Use according to claim 6 wherein the organic liquid is a lubricating oil.

8. A composition comprising a polymer according to any of claims 1 to 4 compounded with an ionic plasticiser.

9. A method for controlling the viscosity of an organic liquid having a solubility parameter of from 6 to 10.5 which comprises incorporating therein a hydrolysed and neutralised polymer according to any of claims 1 to 4.

10. A method according to claim 9 in which there is incorporated with said polymer and organic liquid from 0.1 to 40 weight percent of total weight of a polar cosolvent which is soluble or miscible with the organic liquid and which is present from 20 to 600 moles per mole of ionic group.

11. A method according to claim 9 or claim 10 wherein said polymer is incorporated in said organic liquid at a level of from 0.01 to 20 grams/100 ml.

12. A method according to any of claims 9 to 11 wherein said organic liquid has a viscosity at 38^{o}C (100^{o}F) of less than 35 centipoises.

13. A method according to any of claims 9 to 11 wherein said organic liquid is a lubricating oil.

14. A method according to any of claims 9 to 11 wherein said polar cosolvent is selected from non-volatile alcohols and amines.

15. A lubricating oil having a viscosity at 38^{o}C (100^{o}F) of less than 35 centipoises containing from 0.01 to 20 grams per 100 ml. of a polymer according to any of claims 1 to 4.

## Patentansprüche

1. Polymer, das ein Addukt eines ungesättigten Kohlenwasserstoffpolymers mit Sulfomaleinsäureanhydrid oder einem Derivat oder Isomer hiervon ausgewählt aus 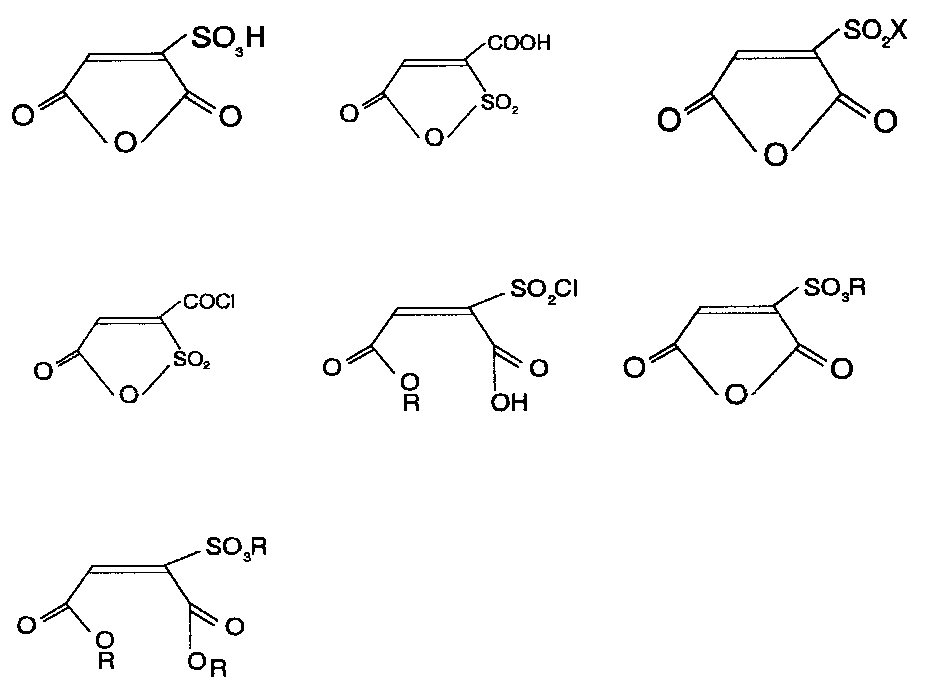 , wobei X Halogen ist und R Alkyl, Alkylsilyl oder Aryl ist; Sulfofumarsäure und β-Sulfoacrylsäureanhydrid ist.

2. Polymer nach Anspruch 1, bei dem das ungesättigte Kohlenwasserstoffpolymer ausgewählt ist aus EPDM-Terpolymeren, Ethylen/Propylen-Copolymeren, Polyisopren, Butylkautschuk, Polybutadien, statistischen und Blockcopolymeren aus Styrol/Butadien und Styrol/Isopren, Polypropylenen und Polyisobutylenen sowie Polyethylen und Polypropylen mit geringer Ungesättigtheit.

3. Modifikation des Polymers nach Anspruch 1 oder 2, bei der die Sulfonsäuregruppen neutralisiert sind mit einem Metallgegenion ausgewählt aus Eisen, Aluminium, Blei und den Gruppen IA, IIA, IB und IIB des Periodensystems der Elemente.

4. Modifikation des Polymers nach Anspruch 1 oder 2, bei der die Sulfonsäuregruppen neutralisiert sind mit Ammoniak oder einem organischen Amin oder Polyamin.

5. Verwendung eines Polymers nach einem der vorhergehenden Ansprüche als thermoplastisches Elastomer.

6. Verwendung eines Polymers nach einem der Ansprüche 1 bis 4 als Additiv für organische Flüssigkeiten.

7. Verwendung nach Anspruch 6, bei der die organische Flüssigkeit ein Schmieröl ist.

8. Zusammensetzung, die ein Polymer nach einem der Ansprüche 1 bis 4 gemischt mit einem ionischen Weichmacher umfaßt.

9. Verfahren zum Einstellen der Viskosität einer organischen Flüssigkeit mit einem Löslichkeitsparameter von 6 bis 10,5, bei dem ein hydrolysiertes und neutralisiertes Polymer nach einem der Ansprüche 1 bis 4 in die Flüssigkeit eingebracht wird.

10. Verfahren nach Anspruch 9, bei dem mit dem Polymer und der organischen Flüssigkeit 0,1 bis 40 Gew.% des Gesamtgewichts eines polaren Colösungsmittels eingebracht wird, das in der organischen Flüssigkeit löslich oder mit dieser mischbar ist und in einer Menge von 20 bis 600 Mol pro Mol ionischer Gruppe vorliegt.

11. Verfahren nach Anspruch 9 oder 10, bei dem das Polymer in die organische Flüssigkeit in einer Menge von 0,01 bis 20 g/100 ml eingebracht wird.

12. Verfahren nach einem der Ansprüche 9 bis 11, bei dem die organische Flüssigkeit eine Viskosität von weniger als 35 Centipoise bei 38°C (100°F) aufweist.

13. Verfahren nach einem der Ansprüche 9 bis 11, bei dem die organische Flüssigkeit ein Schmieröl ist.

14. Verfahren nach einem der Ansprüche 9 bis 11, bei dem das polare Colösungsmittel ausgewählt ist aus nicht flüchtigen Alkoholen und Aminen.

15. Schmieröl mit einer Viskosität von weniger als 35 Centipoise bei 38°C (100°F), das pro 100 ml 0,01 bis 20 g eines Polymers nach einem der Ansprüche 1 bis 4 enthält.

## Revendications

1. Polymère qui est un produit d'addition d'un polymère hydrocarboné insaturé avec de l'anhydride sulfomaléique ou un de ses dérivés ou isomères choisis entre : 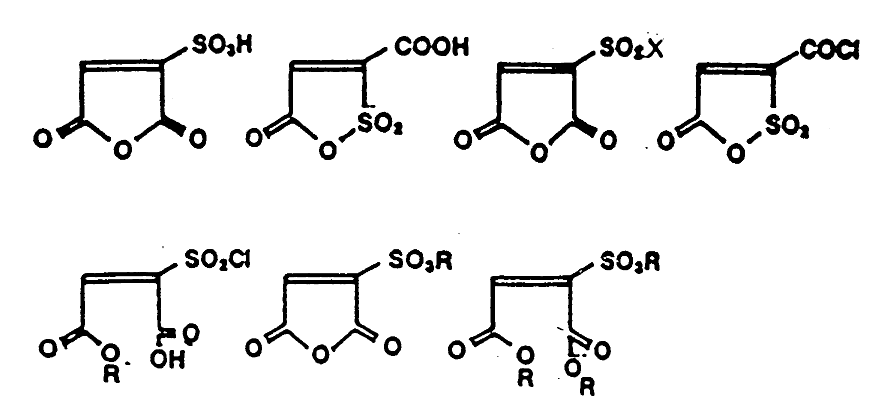 dans lesquels X représente un halogène et R représente un groupe alkyle, alkylsilyle ou aryle ; l'acide sulfomaléique et l'anhydride bêta-sulfoacrylique.

2. Polymère suivant la revendication 1, dans lequel le polymère hydrocarboné insaturé est choisi entre des terpolymères EPDM, des copolymères éthylène-propylène, un polyisoprène, le caoutchouc butyle, un polybutadiène ; des copolymères statistiques et séquencés styrène-butadiène et styrène-isoprène ; des polypropylènes et des polyisobutylènes ; ainsi qu'un polyéthylène et un polypropylène à faibles taux d'insaturation.

3. Modification du polymère suivant la revendication 1 ou la revendication 2, dans laquelle les groupes acide sulfonique ont été neutralisés avec un ion complémentaire métallique choisi entre le fer, l'aluminium, le plomb et les métaux des Groupes IA, IIA, IB et IIB du tableau périodique des éléments.

4. Modification du polymère suivant la revendication 1 ou la revendication 2, dans laquelle les groupes acide sulfonique ont été neutralisés avec l'ammoniac ou bien une amine organique ou polyamine.

5. Utilisation d'un polymère suivant l'une quelconque des revendications précédentes comme élastomère thermoplastique.

6. Utilisation d'un polymère suivant l'une quelconque des revendications 1 à 4 comme additif pour des liquides organiques.

7. Utilisation suivant la revendication 6, dans laquelle le liquide organique est une huile lubrifiante.

8. Composition comprenant un polymère suivant l'une quelconque des revendications 1 à 4 mélangé à un plastifiant ionique.

9. Procédé pour ajuster la viscosité d'un liquide organique ayant un paramètre de solubilité de 6 à 10,5, qui comprend l'incorporation à ce liquide d'un polymère hydrolysé et neutralisé suivant l'une quelconque des revendications 1 à 4.

10. Procédé suivant la revendication 9, dans lequel est incorporée au polymère et au liquide organique une quantité de 0,1 à 40 % en poids, sur la base du poids total, d'un cosolvant polaire qui est soluble dans, ou miscible avec, le liquide organique et qui est présent en une quantité de 20 à 600 moles par mole de groupes ioniques.

11. Procédé suivant la revendication 9 ou la revendication 10, dans lequel le polymère est incorporé au liquide organique en une teneur de 0,01 à 20 g/100 ml.

12. Procédé suivant l'une quelconque des revendications 9 à 11, dans lequel le liquide organique possède une viscosité à 38°C (100°F) inférieure à 35 centipoises.

13. Procédé suivant l'une quelconque des revendications 9 à 11, dans lequel le liquide organique est une huile lubrifiante.

14. Procédé suivant l'une quelconque des revendications 9 à 11, dans lequel le cosolvant polaire est choisi entre des alcools non volatils et des amines.

15. Huile lubrifiante ayant une viscosité à 38°C (100°F) inférieure à 35 centipoises, contenant 0,01 à 20 g/100 ml d'un polymère suivant l'une quelconque des revendications 1 à 4.
